# EUROPÄISCHE PATENTANMELDUNG

(11) **EP 3 616 984 A1**
(43) Veröffentlichungstag der Anmeldung: **04.03.2020**
(21) Anmeldenummer: 19192710.2
(22) Anmeldetag: 20.08.2019
(51) Int. Cl.: B60N 2/894, B60N 2/815, B60N 2/818, B60N 2/865

(54) **VERSTELLBARE KOPFSTÜTZENANORDNUNG FÜR EINEN KRAFTFAHRZEUGSITZ**

(30) Priorität: 03.09.2018 DE 102018214952
(71) Anmelder: Magna Seating (Germany) GmbH, 63877 Sailauf (DE)
(72) Erfinder: BOUCHTI, Mohammed Amin, 63741 Aschaffenburg (DE)
(74) Vertreter: Völger, Silke Beatrix

(57) **Zusammenfassung**

Die Erfindung betrifft eine verstellbare Kopfstützenanordnung für einen Fahrzeugsitz oder eine Sitzanlage eines Kraftfahrzeugs mit Kopfstützenstangen (3), wobei diese an dem Fahrzeugsitz oder der Sitzanlage gelagert sind und die Rastausnehmungen (31) zur Höheneinstellung in z-Richtung aufweisen, eine Vielzahl in x- Richtung verlaufender Verstellelemente (11), wobei die Verstellelemente (11) Rastausnehmungen (12) zur Längeneinstellung umfassen, einem Kopfstützenkasten, der ein vorderes und ein hinteres Kopfstützenkastenelement (6, 1) umfasst, wobei die Vielzahl Verstellelemente (11) zumindest an einem der beiden Kopfstützenkastenelemente (6, 1) angebunden ist, einem horizontalen Betätigungsschieber (4) mit Rastelementen (42) zum Verriegeln und Entriegeln der Kopfstützenstangen (3) in einer voreingestellten Höhe in z- Richtung in Bezug auf den Kopfstützenkasten, einer Anzahl vertikaler Betätigungsschieber (5) mit Rastelementen (51) zum Verriegeln und Entriegeln der Verstellelemente (11) in einer voreingestellten Länge in x-Richtung in Bezug auf den Kopfstützenkasten, einem Kopfstützenkastenträger (2) der in z-Richtung verlaufenden Führungen (22) für die Kopfstützenstangen (3), in y-Richtung verlaufende Führung für den horizontaler Betätigungsschieber (4), in x-Richtung verlaufende Führungen (23) für die Vielzahl Verstellelemente (11) umfasst; einem Betätigungselement (9) zum mittelbaren oder unmittelbaren Betätigen des horizontalen Betätigungsschiebers (4); wobei der horizontale und die Anzahl vertikaler Betätigungsschieber (4, 5) derart wirkverbunden gekoppelt sind, dass durch eine Betätigung des horizontalen Betätigungsschiebers (4) eine Entriegelung der Vielzahl Verstellelemente (11) in Bezug auf den Kopfstützenkasten und gleichzeitig eine Entriegelung der Kopfstützenstangen (3) in Bezug auf den Kopfstützenkasten erreicht wird, wodurch eine Verstellung des Kopfstützenkastens in z- Richtung und in x-Richtung bewirkbar ist.

## Beschreibung

Die vorliegende Erfindung betrifft eine verstellbare Kopfstützenanordnung für einen Kraftfahrzeugsitz.

Kopfstützen sind in Kraftfahrzeugen ein wesentlicher Bestandteil des passiven Sicherheitssystems und dienen der Verminderung von Krafteinwirkungen auf die Halswirbelsäule bei plötzlicher Veränderung der Fahrzeugbewegung, insbesondere bei einem Verkehrsunfall. Zusätzlich zur Verbesserung der Sicherheit der Fahrzeuginsassen dienen Kopfstützen auch der Erhöhung des Komforts.

Damit die Kopfstützen diese Funktionen übernehmen und hinsichtlich ihrer Position individuell an unterschiedliche Fahrzeuginsassen angepasst werden können, sind sie in der Regel einstellbar vorgesehen. Hinsichtlich der Einstellmöglichkeiten sind eine Vielzahl von Ausführungsformen und Varianten bekannt.

Üblicherweise sind die Kopfstützen zumindest höhenverstellbar ausgeführt und mechanisch in unterschiedlichen Positionen verrastbar gehalten. Hierzu weisen die Kopfstützen Tragstangen mit Raststellen sowie eine gepolsterte Tragstruktur auf, die in entsprechenden Aufnahmen des Kraftfahrzeugsitzes gehalten sind.

Weiterhin lassen sich bekannte Kopfstützen häufig zusätzlich hinsichtlich ihrer Neigung einstellen. Bekannt sind auch Ausführungsvarianten die eine kombinierte Einstellung in der Höhe und in der Länge/Tiefe, d.h. Abstand der gepolsterten Tragstruktur in x- Richtung in Bezug auf den Kopf des Fahrzeuginsassen, aufweisen. Eine Kopfstütze mit einer derartigen kombinierten Einstellmöglichkeit ist aus der DE 11 2014 000 095 T5 bekannt.

Aus der DE 10 2010 013 857 A1 ist eine relativ zu einer Rückenlehne eines Fahrzeugsitzes nach Betätigung einer Handhabe und dem Lösen einer Sperreinrichtung verstellbare Kopfstütze bekannt. Die Verstellmöglichkeit umfasst dabei sowohl eine Einstellmöglichkeit hinsichtlich der Höhe und Länge als auch hinsichtlich der Neigung.

Bei den mechanisch einstellbaren Kopfstützen ist es insbesondere wesentlich, dass die Bedienung und Einstellbarkeit für einen Fahrzeuginsassen schnell, einfach und mit geringem Kraftaufwand möglich ist und dass eine optimale, individuelle Anpassung an unterschiedliche Insassen erreicht werden kann. Des Weiteren soll die Herstellung und Montage der Kopfstützen einfach und kostengünstig sein.

Bekannte Kopfstützenanordnungen die sowohl eine Höhenverstellung als auch eine Längenverstellung aufweisen und die hinsichtlich der Bedienung einfach sind, sind häufig mit einer Verstellmechanik ausgeführt, die eine Vielzahl von Bauteilen, insbesondere Zahnradkomponenten aufweist. Dies erfordert einen hohen Montage- und Kostenaufwand.

Aufgabe der vorliegenden Erfindung ist es daher eine Kopfstützenanordnung für ein Kraftfahrzeug derart weiterzubilden, dass diese sicher, einfach und schnell an in eine für den Fahrzeuginsassen optimale Position verstellbar und hinsichtlich der Herstellung und Montage einfach aufgebaut und kostengünstig realisierbar ist.

Diese Aufgabe löst die vorliegende Erfindung mit den im Anspruch 1 genannten Merkmalen.

Durch die im Anspruch 1 angegebene Kopfstützenanordnung kann über eine einfache Betätigung eines Betätigungsknopfes ein gleichzeitiges Lösen der Arretierung der Höheneinstellung sowie der Längeneinstellung in x- Richtung bewirkt werden. Der Fahrzeuginsasse kann dann einfach und schnell ein Verschieben der gepolsterten Tragstruktur in z- Richtung und in x-Richtung erreichen, wobei nach dem Einstellvorgang die Kopfstützenanordnung in dieser Position arretiert gehalten wird.

Die Kopfstützenanordnung zeichnet sich insbesondere weiterhin dadurch aus, dass sie wenige Einzelteile aufweist, so dass die Herstellung sehr kostengünstig und die Montage schnell ausführbar ist. Aufgrund der reduzierten an Bauteilen kann die Kopfstützenanordnung hinsichtlich des Gewichts sehr leicht ausgeführt werden.

Die Längsrichtung entspricht der x-Richtung und definiert die Einstellbarkeit in der Länge. Die Querrichtung entspricht der y-Richtung. Die Hochrichtung entspricht der z-Richtung und definiert die Höheneinstellung in der Beschreibung und den zugeordneten Zeichnungen. Als Vorderseite wird in der nachfolgenden Beschreibung, die zur Fahrtrichtung des Kraftfahrzeugs weisende Seite verstanden. Üblicherweise ist zumindest die zur Vorderseite weisende Seite der Kopfstütze mit einem Bezug versehen und gepolstert ausgeführt. Die Rückseite weist zum Heckbereich des Kraftfahrzeugs.

Die vorliegende Erfindung wird nachfolgend anhand von Ausführungsbeispielen beschrieben, wobei auf die anhängenden Zeichnungen Bezug genommen wird. Darin zeigen:
- Fig. 1: ein erstes Ausführungsbeispiel einer erfindungsgemäßen Kopfstützenanordnung eines Kraftfahrzeugsitzes in einer Explosionsdarstellung,
- Fig. 2: ein zweites Ausführungsbeispiel einer erfindungsgemäßen Kopfstützenanordnung eines Kraftfahrzeugsitzes in einer Explosionsdarstellung,
- Fig. 3a, b: eine Detaildarstellung der Steuermechanik zur Verrastung/Entrastung zwecks Einstellung der Länge / x- Richtung,
- Fig. 4a, b: eine Detaildarstellung der Steuermechanik zur Verrastung/Entrastung zwecks Einstellung der Höhe / z- Richtung; und
- Fig. 5a, b: Detaildarstellungen von zwei Ausführungsbeispielen der mechanischen Arretierung der x-Richtung.

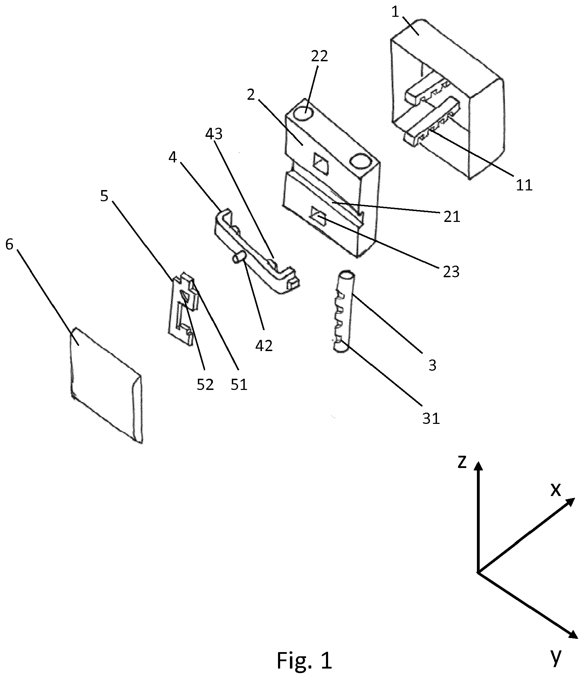

Die erfindungsgemäße Kopfstützenanordnung für einen Kraftfahrzeugsitz ist mit den wesentlichen Bauteilen in der Figur 1 in einer Explosionsdarstellung schematisch abgebildet und umfasst im Wesentlichen den Kopfstützenkastenträger 2 mit Führungen für Kopfstützenstangen 22, eine Führung 21 für einen horizontalen Betätigungsschieber 4, und Führungen 23 für eine Verrastung des Kopfstützenkastens; Kopfstützenstangen 3 mit Rastausnehmungen 31; einen Kopfstützenkasten umfassend ein vorderes Kopfstützenkastenelement 6 mit Kopfanlageteil, ein hinteres Kopfstützenkastenelement 1 sowie Verstellelemente 11; einem Betätigungselement 9; einem horizontalen Betätigungsschieber 4 mit Steuernocken 42 und zwei Rastelementen 43 zur Verriegelung der Höheneinstellung; zwei vertikalen Betätigungsschieber 5 jeweils mit Steuerkontur 52 sowie Rastelement 51 zur Verriegelung der Längseinstellung.

Die Kopfstützenanordnung ist über die beiden parallel zueinander angeordneten Kopfstützenstangen 3 an einer Rückenlehne bzw. Rückenlehnenstruktur eines Kraftfahrzeugsitzes oder einer Sitzanlage zum Schutz des Kopfes eines Insassen angebunden. Zur individuellen Anpassung an unterschiedliche Insassen ist die Kopfstützenanordnung bzw. der Kopfstützenkasten mit Kopfanlageteil in Bezug auf die Rückenlehne in der Höhe d.h. in z- Richtung höheneinstellbar ausgeführt. Des Weiteren ist die Kopfstützenanordnung bzw. der Kopfstützenkasten mit Kopfanlageteil in der Horizontalen hinsichtlich der Länge d.h. der x-Richtung einstellbar ausgeführt. Diese Einstellmöglichkeiten sind in den Figuren mit entsprechenden Doppelpfeilen dargestellt. In der Gebrauchsposition ist die Kopfstützenanordnung hinsichtlich der Höheneinstellung und der Längeneinstellung verriegelt / arretiert und kann nicht verstellt werden. Dies bedeutet, dass sowohl die Kopfstützenstangen 3 verriegelt in Bezug auf den Kopfstützenkastenträger 2 als auch die Verstellelemente 11 in Bezug auf den Kopfstützenkastenträger verriegelt gehalten sind.

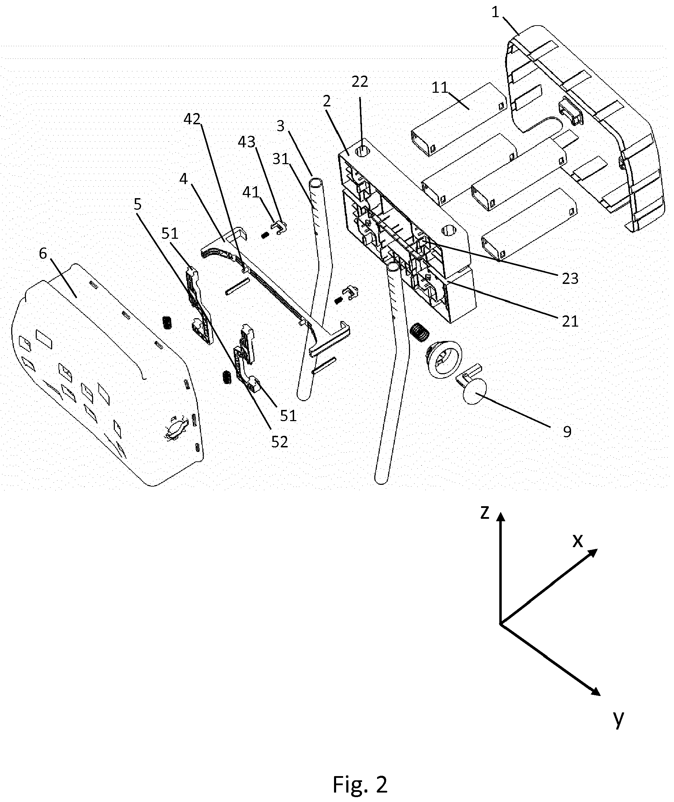

Der zweiteilig ausgeführte Kopfstützenkasten umfasst ein vorderes Kopfstützenkastenelement 6 mit Kopfanlageteil sowie ein hinteres Kopfstützenkastenelement. Zumindest das vordere Kopfstützenkastenelement 6, welches als Kopfanlageteil ausgeführt ist, ist mit einem Bezug und einem Polster versehenen. Wie es insbesondere aus der Figur 2 zu erkennen ist, ist die nach vorne gerichtete Seite des vorderen Kopfstützenkastenelementes 6 leicht konkav ausgeführt. Polster sowie der Bezug sind in den Zeichnungen nicht dargestellt. Vorderes Kopfstützenkastenelement 6 und hinteres Kopfstützenkastenelement 1 sind im Wesentlichen als rechteckig ausgeformte Gehäusehalbschalen, vorzugsweise aus einem Kunststoffmaterial ausgeformt. Beide Halbschalen werden bei der Montage der Kopfstützenanordnung über randseitig umlaufende Rastverbindungsstellen gefügt. Im Gehäuseinneren nimmt der Kopfstützenkasten die Verstellmechanik zur Höhen- und Längeneinstellung sowie den oberen Endbereich der Kopfstützenstangen 3 und den Kopfstützenkastenträger 2 auf.

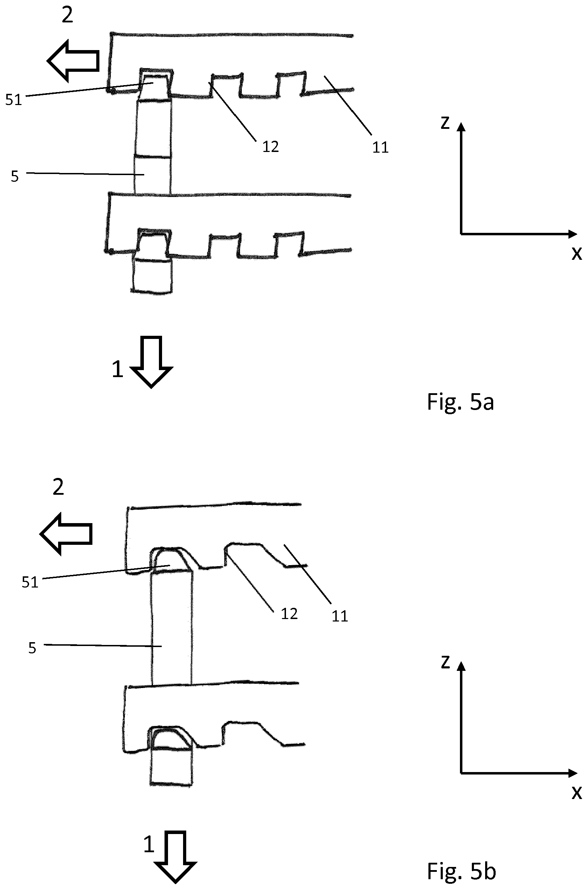

Zwischen den Kopfstützenkastenelementen 1, 6 sind gemäß der Ausführungsvarianten Figur 1 zwei bzw. gemäß der Ausführungsvarianten Figur 2 vier die beiden Halbschalen verbindende Verstellelemente 11 angeordnet. Die Verstellelemente 11 sind als im Querschnitt rechteckige Stangen aus einem Hohlprofil ausgeführt und verlaufen parallel zueinander in der Längsverstellrichtung / x Richtung. Endseitig sind die Verrastelemente 11 jeweils an der Innenseite des vorderen Kopfstützkastenelementes bzw. des hinteren Kopfstützkastenelementes angebunden, vorzugsweise verrastet gehalten. Bei der in der Figur 1 dargestellten Ausführungsform sind die Verstellelemente 11 einteilig mit dem hinteren Kopfstützkastenelement 1 verbunden und an dem vorderen Kopfstützenkastenelement 6 verrastet gehalten. Zwecks Verrastung der Längseinstellung sind die Verrastelemente 11 jeweils an ihrer nach unten weisenden Seite mit Rastausnehmungen 12 ausgeführt. Die Verstellelemente 11 sind durch Führungen 23 im Kopfstützenkastenträger 2 geführt und sind dort über Verrastelemente 51 arretiert in einer voreingestellten Position gehalten. Hierbei greifen die Verrastelemente 51 in eine korrespondierende Rastausnehmung 12 ein. Die Figuren 5a und 5b zeigen die Rastausnehmungen im Querschnittsprofil in zwei Ausführungen, wobei Figur 5a ein rechteckiges Profil und Figur 5b eine Art Sägezahnprofil zeigen. Die Verrastelemente 51 sind entsprechend dem Profil der Rastausnehmungen 12 angepasst ausgeführt. Die Verrastelemente 51 sind an den vertikalen Betätigungsschiebern 5 angeordnet. Die beiden parallel zueinander beabstandet angeordneten Betätigungsschieber 5 werden, wie nachfolgend noch näher beschrieben, über den horizontalen Betätigungsschieber 4 verstellt und bewirken sowohl eine Entriegelung bzw. Verriegelung der Kopfstützenstangen 3 in Bezug auf den Kopfstützenkastenträger 2 und gleichzeitig eine Entriegelung bzw. Verriegelung der Verstellelemente 11 in Bezug auf den Kopfstützenkastenträger 2.

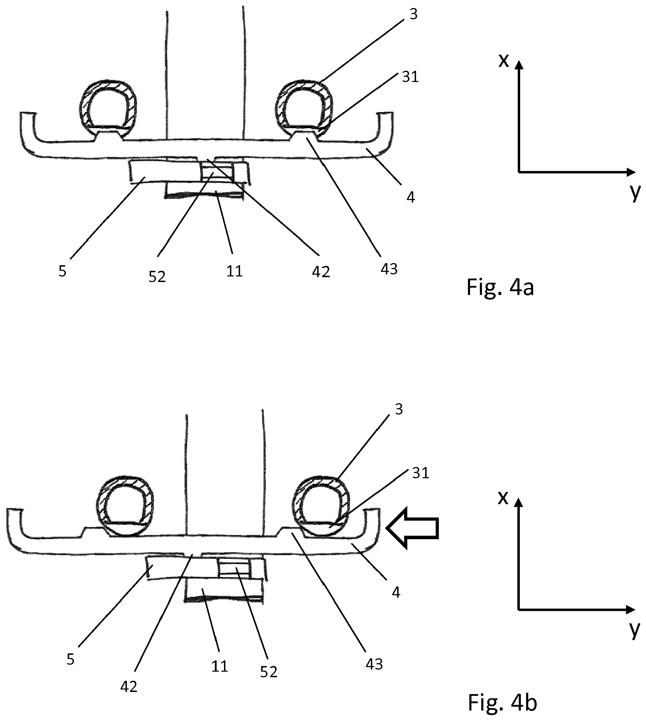

Zwecks manueller Höheneinstellung weisen die Kopfstützenstangen 3 an ihren nach oben weisenden Endbereichen Rastausnehmungen 31 in Form von Kerben auf. Die Endbereiche der Kopfstützenstangen 3 sind mittels der nach oben weisenden Endbereiche in den Führungen 22 des Kopfstützenkastenträgers 2 arretierbar in z- Richtung verschieblich gehalten. Die Führungen 22 sind als in z-Richtung angeordnete Bohrungen ausgeführt und weisen in Bezug auf die Kopfstützenstangen 3 eine entsprechende Größe auf. Die entsprechende Mechanik zur Arretierung bzw. zum Lösen der Arretierung der Kopfstützenstangen 2 in einer eingestellten Höhenposition wird anhand der Figuren 4a, 4b näher beschrieben.

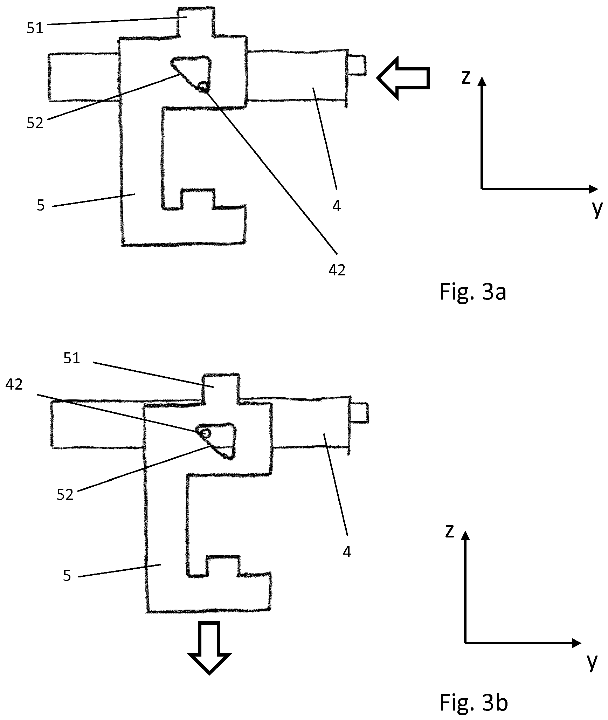

Zwecks Einstellung und Verstellung der Höhe und/oder Länge der Kopfstützenanordnung muss der Insasse das seitlich an dem Kopfstützenkasten angeordnete Betätigungselement 9 drücken, wodurch die obenstehend genannte Entriegelung in z-Richtung und in x-Richtung erreicht wird. Das Betätigungselement 9 ist vorzugsweise als federvorbelastete Druckknopfanordnung ausgeführt, wobei der Druckknopf nach Betätigung selbsttätig wieder in die Ausgangsposition zurückspringt. Bei Betätigung des Betätigungselementes 9 wirkt dieses auf den horizontalen Betätigungsschieber 4, der in y- Richtung verschieblich in der Führung des Kopfstützenkastenträgers 2 angeordnet ist. Diese Verschiebung ist in der Figur 3a durch den Pfeil dargestellt.

Der horizontale Betätigungsschieber 4 weist zwei Steuernocken 42 auf, die jeweils einem vertikalen Betätigungsschieber 5 zugeordnet sind und in eine Steuerkontur 52 des vertikalen Betätigungsschiebers 5 eingreifen. Die Steuerkontur ist beispielhaft in den Figuren 3a und 3b dargestellt und ist als dreieckförmige Ausnehmung ausgeführt. Bei einer in den Figuren 3a dargestellten Betätigung des Betätigungsschiebers 4 über das Betätigungselement 9 und Verschiebung in y-Richtung wird durch eine zwangsgeführte Steuerung der Steuernockens 42 längs der Steuerkonturen 52 eine Verschiebung der vertikalen Betätigungsschieber 5 in z-Richtung nach unten bewirkt. Dies ist durch den Pfeil in der Figur 3b gezeigt. In der schematischen Darstellung der Figuren 3a, 3b ist dabei nur ein Betätigungsschieber 5 dargestellt. Durch die Verschiebung nach unten in z-Richtung werden die Verrastelemente 51 ebenfalls nach unten verschoben und werden aus der zugeordneten Rastausnehmung 12 herausgeschoben, wodurch eine Entriegelung der Längseinstellung erreicht wird. In dieser entriegelten Situation kann der Kopfstützenkasten über die Verstellelemente 11 in x-Richtung verstellt werden.

Die Verstellung ist durch die Pfeile in den Figuren 5a, 5b gezeigt, die schematisch nur ein Verstellelement 11 mit zugeordnetem Verrastelement 51 zeigen.

Der horizontale Betätigungsschieber 4 ist auf seiner den Steuernocken gegenüberliegenden Seite mit beidseits angeordneten Rastelementen 43 ausgeführt. Diese Rastelemente 43 greifen in der Gebrauchsposition in entsprechende Rastausnehmungen 31 der Kopfstützenstangen 3 ein und verriegeln die voreingestellte Höhe des Kopfstützenkastenträgers 2 in Bezug auf die Kopfstützenstangen 3. Die verriegelte Position einer Kopfstützenstange 3 ist in der Figur 4a dargestellt.

Durch die obenstehend bereits erläuterte Verschiebebewegung des horizontalen Betätigungsschiebers 4 die in der Figur 4b durch den Pfeil angezeigt ist, werden die Rastelemente 43 aus den Rastausnehmungen 31 herausgeschoben und die Kopfstützenstangen 3 sind entriegelt. In dieser in Figur 4b dargestellten Situation kann eine Verstellung des Kopfstützenkastenträgers 2 / Kopfstützenkastens in Bezug auf die Kopfstützenstangen 3 durch den Insassen vorgenommen werden.

Nach erfolgter Einstellung in der entsprechenden Längen- / bzw. Höhenposition verrasten die Rastelemente 43 in entsprechenden Rastausnehmungen bzw. es verrasten die Rastelemente 51 in entsprechend zugeordneten Rastausnehmungen 12. Dies wird durch die selbsttätige Rückstellbewegung des horizontalen Betätigungsschiebers 4 und somit zwangsgesteuerter Rückstellbewegung des vertikalen Betätigungsschiebers 5 erreicht.

## Patentansprüche

1. Verstellbare Kopfstützenanordnung für einen Fahrzeugsitz oder eine Sitzanlage eines Kraftfahrzeugs mit:
- Kopfstützenstangen (3), wobei diese an dem Fahrzeugsitz oder der Sitzanlage gelagert sind und die Rastausnehmungen (31) zur Höheneinstellung in z-Richtung aufweisen,
- eine Vielzahl in x- Richtung verlaufender Verstellelemente (11), wobei die Verstellelemente (11) Rastausnehmungen (12) zur Längeneinstellung umfassen,
- einem Kopfstützenkasten, der ein vorderes und ein hinteres Kopfstützenkastenelement (6, 1) umfasst, wobei die Vielzahl Verstellelemente (11) zumindest an einem der beiden Kopfstützenkastenelemente (6, 1) angebunden ist,
- einem horizontalen Betätigungsschieber (4) mit Rastelementen (42) zum Verriegeln und Entriegeln der Kopfstützenstangen (3) in einer voreingestellten Höhe in z- Richtung in Bezug auf den Kopfstützenkasten,
- einer Anzahl vertikaler Betätigungsschieber (5) mit Rastelementen (51) zum Verriegeln und Entriegeln der Verstellelemente (11) in einer voreingestellten Länge in x-Richtung in Bezug auf den Kopfstützen kasten,
- einem Kopfstützenkastenträger (2) der in z-Richtung verlaufende Führungen (22) für die Kopfstützenstangen (3), eine in y-Richtung verlaufende Führung für den horizontalen Betätigungsschieber (4), in x-Richtung verlaufende Führungen (23) für die Vielzahl Verstellelemente (11) umfasst;
- einem Betätigungselement (9) zum mittelbaren oder unmittelbaren Betätigen des horizontalen Betätigungsschiebers (4);
- wobei der horizontale und die Anzahl vertikaler Betätigungsschieber (4, 5) derart wirkverbunden gekoppelt sind, dass durch eine Betätigung des horizontalen Betätigungsschiebers (4) eine Entriegelung der Vielzahl Verstellelemente (11) in Bezug auf den Kopfstützenkasten und gleichzeitig eine Entriegelung der Kopfstützenstangen (3) in Bezug auf den Kopfstützenkasten erreicht wird, wodurch eine Verstellung des Kopfstützenkastens in z- Richtung und in x-Richtung bewirkbar ist.

2. Verstellbare Kopfstützenanordnung nach Anspruch 1, **dadurch gekennzeichnet, dass** die Wirkverbindung zwischen horizontalem Betätigungsschieber (4) und der Anzahl vertikaler Betätigungsschieber (5) über eine Kulissensteuerung erreicht wird, wobei an dem horizontalen Betätigungsschieber (4) Steuernocken (42) angeordnet sind, die in korrespondierende Steuerkonturen (52) der Anzahl vertikaler Betätigungsschieber (5) eingreifen.

3. Verstellbare Kopfstützenanordnung nach Anspruch 1 oder 2, **dadurch gekennzeichnet, dass** die vertikalen Betätigungsschieber (5) mit Rastelementen (51) ausgeführt sind, die zum Eingriff in die Rastausnehmungen (12) der Verstellelemente (11) ausgebildet sind.

4. Verstellbare Kopfstützenanordnung nach einem der vorangehenden Ansprüche, **dadurch gekennzeichnet, dass** der horizontale Betätigungsschieber (4) Rastelemente (43) zum Eingriff in die Rastausnehmungen (31) der Kopfstützenstangen (3) aufweist.

5. Verstellbare Kopfstützenanordnung nach einem der vorangehenden Ansprüche, **dadurch gekennzeichnet, dass** vier Verstellelemente (11) angeordnet sind.
